# EUROPÄISCHE PATENTSCHRIFT

(11) **EP 2 334 512 B1**
(45) Veröffentlichungstag und Bekanntmachung des Hinweises auf die Patenterteilung: **04.07.2012**
(21) Anmeldenummer: 08875540.0
(22) Anmeldetag: 23.12.2008
(51) Int. Cl.: B60R 1/02

(54) **SPIEGELELEMENT**
MIRROR ELEMENT
ELEMENT MIROIR

(30) Priorität: 12.09.2008 DE 102008046981
(43) Veröffentlichungstag der Anmeldung: 22.06.2011
(73) Patentinhaber: MEKRA Lang GmbH & Co. KG, 90765 Fürth (DE)
(72) Erfinder: LANG, Werner, 91465 Ergersheim (DE); KILIC, Orhan, 91522 Ansbach (DE); POPP, Albrecht, 91629 Weihenzell (DE)
(74) Vertreter: Winter, Brandl, Fürniss, Hübner, Röss, Kaiser, Polte - Partnerschaft
(86) Internationale Anmeldenummer: PCT/EP2008/068250
(87) Internationale Veröffentlichungsnummer: WO 2010/028700

(56) Entgegenhaltungen:
- DE-A1- 2 703 105
- DE-A1- 4 133 330

## Beschreibung

Die Erfindung betrifft ein Spiegelelement mit einer Spiegelscheibe und einem Spiegelträger, wobei die Spiegelscheibe am Spiegelträger umfangsseitig mit Haltemitteln festgelegt ist.

Es ist bekannt, eine Spiegelscheibe an einem Spiegelträger dadurch zu befestigen, dass eine Glaseinheit bestehend aus einem Träger und der Spiegelscheibe, die mit dem Träger verklebt ist, auf ein Spiegelgehäuse geclipst wird, wobei hierbei das Spiegelgehäuse als Spiegelträger definiert sei. In der Praxis hat dieser Lösungsansatz den Vorteil, dass im Reparaturfall die Scheibe durch Tauschen der geclipsten Glaseinheit einfach und schnell austauschbar ist. Von Nachteil sind jedoch die höheren Kosten, da die Glaseinheit aus dem Träger, der Verklebung und die Scheibe besteht.

Aus der DE 41 33 330 A1 ist z.B. ein Kraftfahrzeug-Rückspiegel bekannt, bei dem die Spiegelscheibe an dem Spiegelgehäuse festgeclipst wird. Bei einer der dortigen Ausführungsformen sind hierzu mehrere Clipse oder Rasthaken (z.B. einer pro Gehäuseseite und damit insgesamt vier) vorgesehen, welche den Rand der Spiegelscheibe um- und übergreifen und die Spiegelscheibe gegen gehäuseseitige Gegenlagerflächen drücken. Bei einer anderen Ausführungsform in der DE 41 33 330 A1 umgreift die freie umlaufende Endkante des Spiegelgehäuses den Spiegelscheibenrand im wesentlichen vollständig entlang dessen umlaufender Länge.

Als zweite Möglichkeit haben sich in der Praxis sogenannte eingeschrumpfte Gläser etabliert. Hierbei wird direkt nach dem Spritzprozess des Spiegelgehäuses die Scheibe in das Spiegelgehäuse gedrückt. Da das Material des Spiegelgehäuses durch den soeben erfolgten Spritzprozessvorgang noch weich ist und sich darüber hinaus im Zuge der Erkaltung durch einen Schrumpfprozess noch verkleinert, kann die Scheibe, welche an sich größer als die freie Öffnung des Spiegelgehäuses ist, zunächst überhaupt trotz des Übermaßes in besagte Öffnung eingesetzt werden und darüber hinaus umschließt nach dem Erkalten das Spiegelgehäusematerial die Scheibe fest und unlösbar.

Von Vorteil hierbei sind im Vergleich zu der aufgeclipsten Glaseinheit die verringerten Kosten. Nachteilig ist, dass für das Spiegelgehäuse auf ein spezielles Material (in der Regel Polypropylen) zurückgegriffen werden muss, welches geringe Dauerbeständigkeit, insbesondere gegen UV-Strahlung hat. Weiterhin ist eine direkte Anordnung der Einbaustation an der Spritzmaschine notwendig, um die Scheibe in das noch warme Spiegelgehäuse einsetzen zu können und schließlich ist ein zerstörungsfreier Tausch der Scheibe nahezu unmöglich.

Ausgehend von der zuletzt beschriebenen Befestigungsmöglichkeit für z. B. das Glas der Spiegelscheibe ist es somit Aufgabe der vorliegenden Erfindung, den Vorteil der leichten Austauschbarkeit der Spiegelscheibe mit gleichzeitig einfacher Montage und geringen Kosten zu ermöglichen.

Zur Lösung dieser Aufgabe ist gemäß der vorliegenden Erfindung ein Spiegelelement vorgesehen, mit einer Spiegelscheibe und einem Spiegelträger, wobei die Spiegelscheibe am Spiegelträger umfangsseitig mit Haltemitteln festgelegt ist, wobei die Haltemittel in Form von elastisch verformbaren Halteclipsen auf Seiten des Spiegelträgers angeordnet sind, welche die Spiegelscheibe an deren Umfangskante umgreifen und zerstörungsfrei wieder entfernbar an dem Spiegelträger lagefixieren. Hierbei ist ein Teil der Umfangserstreckung der Spiegelscheibe in eine an dem Spiegelträger ausgebildete Nut einsteckbar und der verbleibende Teil der Umfangserstreckung der Spiegelscheibe ist durch die Halteclipse lagefixiert.

Die erfindungsgemäße Ausgestaltung der Haltemittel stellt eine konstruktive Annäherung an ein eingeschrumpftes Glas für die Spiegelscheibe bis zu einem konstruktiven Maximum derart da, dass bei Erreichen dieses konstruktiven Maximums eben gerade nicht ein Einschrumpfvorgang zum Befestigen der Spiegelscheibe notwendig ist, sondern ein Befestigungsablauf, der nach wie vor weitestgehend einer Clipsbefestigung entspricht.

Gegenüber der reinen Clipsbefestigung werden jedoch mit der erfindungsgemäßen Ausgestaltung der Haltemittel weitaus höhere Halte- und Befestigungskräfte erreichbar, da ein nicht unerheblicher Anteil des Außenumfangs der Spiegelscheibe dennoch nach Art einer Einschrumpfung durchgängig in einer Nut gehalten ist. Es wird also ein Teil der Umfangsersteckung durchgängig durch die am Spiegelträger ausgebildete Nut aufgenommen und ein Teil der Umfangserstreckung durch Halteclipse lagefixiert, sodass sich gegenüber einer reinen Lagefixierung mit Halteclipsen alleine eine noch bessere Halterung der Spiegelscheibe am Spiegelträger ergibt. Darüber hinaus ist durch diese Nut am Spiegelträger die Montage der Spiegelscheibe erleichtert, wie sich aus der nachfolgenden detaillierten Beschreibung noch besser ergeben wird.

Beim Gegenstand der vorliegenden Erfindung kann auf die material- und kostenaufwändige Lösung verzichtet werden, die Spiegelscheibe mit einer Verklebung an einem Träger festzulegen, der seinerseits entsprechende Haltemittel aufweist, die dann in entsprechende Gegenhaltemittel am Spiegelgehäuse eingreifen. Da darüber hinaus die Spiegelscheibe nicht in eine vom vorangehenden Spritzgussprozess noch weiche Öffnung am Spiegelgehäuse eingepasst werden muss, entfällt die Notwendigkeit, das Glas direkt nach dem Spritzprozess an der Spritzgussmaschine montieren zu müssen, was zu mehr Flexibilität im Gesamtmontageprozess führt. Darüber hinaus kann das Spiegelgehäuse aus einem nahezu beliebigen Material hergestellt werden, sodass es möglich wird, auch anderen Anforderungen außer der Spritzgießbarkeit Rechnung zu tragen, beispielweise der UV-Beständigkeit. Durch eine freiere Materialwahl lassen sich auch bessere Oberflächen erzielen.

Im Schadensfall kann die Spiegelscheibe problemlos durch eine neue Scheibe ersetzt werden, wobei hierbei eben nur die bloße Spiegelscheibe ersetzt werden muss und nicht noch zusätzlich ein mit der Scheibe verklebter Träger. Dies reduziert sowohl die Kosten für die Reparatur und stellt auch aufgrund von weniger Abfall eine Umweltentlastung dar.

Bei bisher bekannten Lösungen war eine recyclinggerechte Verwertung schwierig, da bei einer thermischen Nutzung (Einschmelzung) das Glas hinderlich ist. Eine materialgerechte Verwertung schied ohnehin aus. Beim Gegenstand der vorliegenden Erfindung sind diese Anforderungen jedoch problemlos erfüllbar, da das Glas ohne großen Aufwand sortenrein vom Kunststoff getrennt werden kann.

Bevorzugt drücken die Halteclipse den Umfangsrand der Spiegelscheibe gegen eine an dem Spiegelträger randseitig ausgebildete Anlagefläche. Unter Ausnutzung der elastischen Kraft der Halteclipse erfolgt hierdurch eine sichere und eine insbesondere vibrationsfreie Halterung der Spiegelscheibe.

Sind die Halteclipse entlang des verbleibenden Teils der Umfangserstreckung der Spiegelscheibe verteilt, insbesondere gleichmäßig verteilt angeordnet, ergeben sich durch die gleichmäßig verteilte Krafteinleitung keine örtlichen Spannungsbelastungen oder gar Überbeanspruchungen der Spiegelscheibe.

Die Nut und die Halteclipse sind bevorzugt zumindest an zwei einander gegenüberliegenden Umfangsbereichen des Spiegelträgers ausgebildet und/oder angeordnet. Hierdurch wird die Montage noch weiter vereinfacht und ist gegebenenfalls auch einer Automatisierung zuführbar.

Sind die Halteclipse einstückig mit dem Spiegelträger ausgebildet, lassen sich der Fertigungsaufwand und damit die Herstellungskosten verringern.

Wird die Spiegelscheibe zwischen den Haltemitteln verspannt, kann dies zu einer noch besseren Vibrationssicherheit beitragen. Eine Verspannung der Spiegelscheibe zwischen der Haltemitteln kann insbesondere dann erfolgen, wenn die Spiegelscheibe nicht aus einem Glaskörper, sondern aus einem elastisch verformbaren Bauteil besteht, beispielsweise einer verspiegelten Metallplatte, einer Kunststoffplatte mit Spiegelbeschichtung oder dergleichen. Unter Ausnutzung der materialinhärenten Flexibilität solcher Spiegelscheiben kann im Zuge der Montage dann die Spiegelscheibe hinter die Halteclipse eingeschnappt und zwischen den Halteclipsen und der Nut verspannt werden.

Der Spiegelträger kann gemäß einer Ausgestaltungsform auch ein Spiegelgehäuse sein, wobei das Spiegelgehäuse in an sich bekannter Weise in Form einer offenen Schale ausgebildet ist und die Spiegelscheibe am Rand der Schalenöffnung lagefixierbar ist.

Bevorzugt ist die Schalenform des Spiegelgehäuses hierbei in Draufsicht im Wesentlichen trapezförmig oder auch rechteckig, wobei sich die Nut durchgängig über eine volle Längserstreckung einer der Trapez- oder Rechteckseiten und über einen Teil der Längserstreckungen der beiden sich hieran anschließenden Seiten erstreckt. Durch diesen Verlauf der Nut wird die Spiegelscheibe gegenüber dem Spiegelgehäuse sicher festgelegt, wobei insbesondere ein vibrationsfreier Sitz sichergestellt ist.

Weiterhin kann wenigstens eine Verstärkungsrippe die Schalenöffnung derart überspannen, dass die Spiegelscheibe in ihrer fixierten Endlage hieran aufliegt. Hierdurch erfährt die Spiegelscheibe von ihrer Rückseite her eine zusätzliche Abstützung, was insbesondere bei großen Spiegelscheiben, welche eine große Fläche zu überspannen haben aus Stabilitätsgründen vorteilhaft ist.

Der Spiegelträger kann eine Spiegelträgerplatte sein, wobei der Begriff "Platte" nicht als ein Bauteil zu interpretieren ist, an welchem die Spiegelscheibe vollflächig plan anliegen muss. In der Praxis und damit bevorzugt wird die "Platte" eher eine Art offene flache Schale sein, wobei die Spiegelscheibe am Rand der Schalenöffnung lagefixierbar ist. Spiegelträgerplatten kommen - unabhängig von ihrer konkreten Bauform - bei sogenannten Glasverstellern zum Einsatz, bei denen die Spiegelscheibe in einem Aufnahmegehäuse angeordnet und durch entsprechende Stellmittel verstellbar ist. Diese Stellmittel greifen dann an der Spiegelträgerplatte an, die darüber hinaus über entsprechende Lagermittel in dem Aufnahmegehäuse geführt ist. Die Spiegelscheibe ist hierbei mehr oder weniger an der Platte (dem Rand der Schalenöffnung) anliegend, wobei die Spiegelträgerplatte gegebenenfalls umfangsseitig über die Spiegelscheibe überstehen kann und dann die Haltemittel in dem Überstand angeordnet sein können. Im Gegensatz zu einer Glaseinheit bestehend aus einem Träger und einem hiermit verklebten Glas kann somit im Schadensfall die Spiegelscheibe allein ausgetauscht werden, indem sie von der als Spiegelträger dienenden Spiegelträgerplatte abgenommen und durch eine neue Spiegelscheibe ersetzt wird. Sind die Haltemittel in dem randseitigen Überstand angeordnet, mit welchem die Spiegelträgerplatte umfangsseitig über die Spiegelscheibe hinaus vorsteht, tragen die Haltemittel weder radial noch axial wesentlich zur Vergrößerung des Spiegelträgers bei.

Gegenstand der vorliegenden Erfindung ist auch ein Fahrzeugrückspiegel mit einem im Spiegelgehäuse angeordneten erfindungsgemäßen Spiegelelement, welches gegenüber dem Spiegelgehäuse um wenigstens eine Achse verstellbar ist.

Weitere Einzelheiten, Aspekte und Vorteile der vorliegenden Erfindung ergeben sich aus der nachfolgenden Beschreibung einer Ausführungsform anhand der Zeichnung.

Es zeigt:
Fig. 1 eine vereinfachte perspektivische Schrägansicht auf einen Spiegelträger, der gemäß einer Ausführungsform der Erfindung als Spiegelgehäuse ausgebildet ist;
Fig. 2 einen Schnitt durch ein Spiegelgehäuse, welches gegenüber der Darstellung von Fig. 1 mit der dortigen nach oben weisenden Öffnung um 180° gedreht ist, sodass die Öffnung nach unten weist;
Fig.3 einen in Fig. 2 mit III bezeichneten vergrößerten Ausschnitt;
Fig. 4 einen in Fig. 2 mit IV bezeichneten vergrößerten Ausschnitt; und
Fig. 5A -5D Seitenansichten, die den Ablauf der Montage einer Spiegelscheibe an dem Spiegelgehäuse der Fig. 1 und 2 zeigen.

Die in den einzelnen Figuren der Zeichnung gewählten Ansichten sind zueinander nicht maßstäblich.

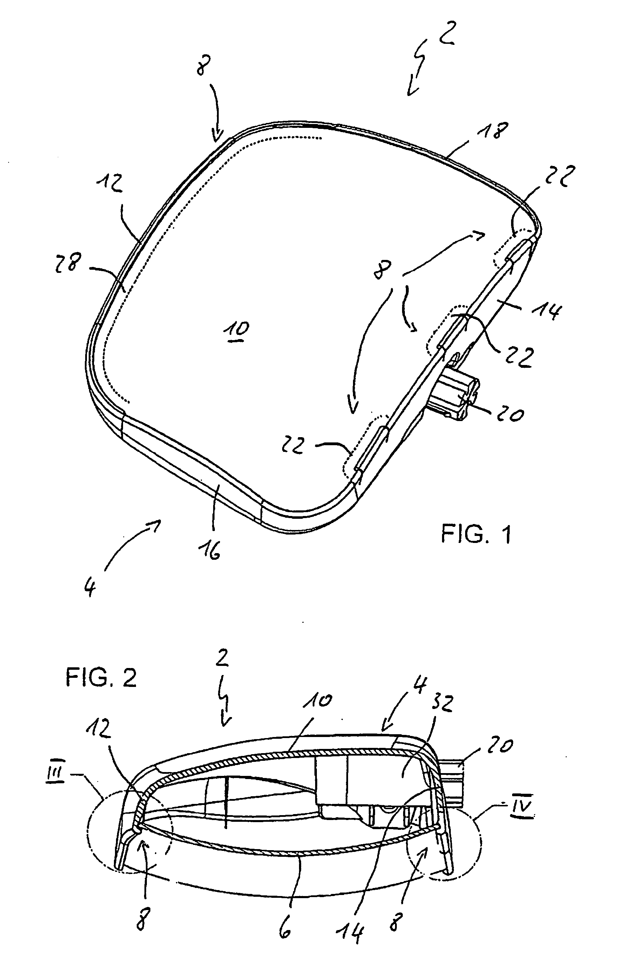

Ein in der Zeichnung insgesamt mit 2 bezeichnetes Spiegelelement umfasst etwa gemäß den Figuren 1 und 2 im Wesentlichen einen Spiegelträger 4 und eine vom Spiegelträger 4 gehaltene Spiegelscheibe 6, die am Spiegelträger 4 durch geeignete Haltemittel 8 lagefixiert ist.

Der Spiegelträger 4 sei im Ausführungsbeispiel, das in den Figuren der Zeichnung gewählt ist, in Form eines Spiegelgehäuses ausgebildet, welches etwa gemäß den Figuren 1 und 2 im Wesentlichen die Form einer offenen Schale mit einer Bodenfläche 10 und vier hiervon nach oben vorstehenden Seitenwänden hat. Im Ausführungsbeispiel von Fig. 1 hat das Spiegelgehäuse in Draufsicht die Form eines Rechtecks mit zwei gegenüberliegenden langen Seiten 12 und 14 und ebenfalls zwei gegenüberliegenden kurzen Seiten 16 und 18. Von der langen Seite 14 aus erstreckt sich ein Stummel oder Flansch 20, mit dem der Spiegelträger 4 (das Spiegelgehäuse) in nicht näher dargestellter Weise beispielsweise an einer Fahrzeugkarosserie anbringbar ist.

Wie weiterhin aus den Figuren 1 und 2 hervorgeht, stoßen die Bodenfläche 10 und die Seiten oder Seitenwände 12 bis 18 nicht winklig aneinander, sondern gehen in entsprechenden Radien weich ineinander über.

Die Spiegelscheibe 6 liegt in der von den oberen freien Rändern der Seitenwände 12 bis 18 definierten Öffnung des Spiegelgehäuses 4 und ist im Bereich des Rands der Schalenöffnung durch die Haltemittel 8 festgelegt.

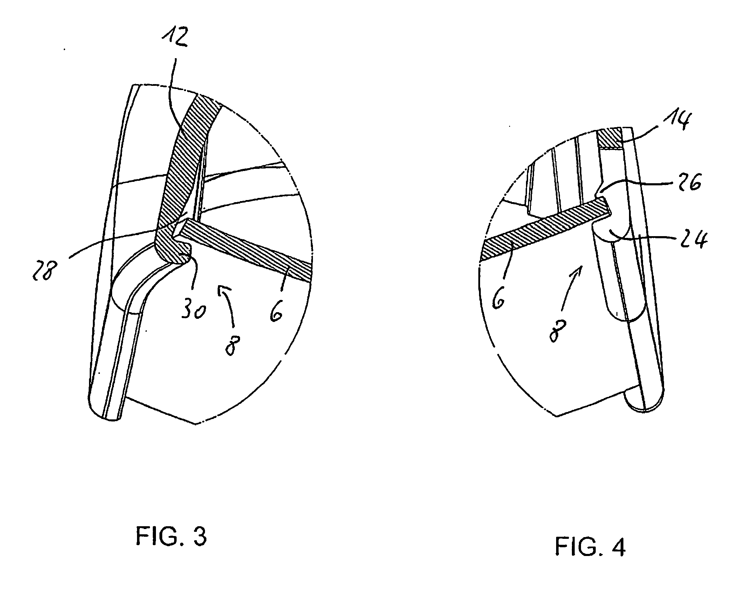

Die Anordnung beziehungsweise Ausgestaltung der Haltemittel 8 geht am besten aus den Figuren 1, 3 und 4 hervor, wobei Fig. 3 eine vergrößerte Darstellung des Ausschnitts III in Fig. 2 und Fig. 4 eine vergrößerte Darstellung des Ausschnitts IV in Fig. 2 ist.

Die Haltemittel 8 sind gemäß einer Ausführungsform als elastisch verformbare Halteclipse 22 ausgebildet, die sich in der Ausgestaltungsform gemäß Fig. 1 alleine auf Seiten der Langseite 14 im Bereich des oberen Rands der Langseite 14 befinden und entlang besagten Rands im gleichen Abstand zueinander angeordnet sind.

Gemäß der Figuren 1 und 4 umgreifen die Clipse 22 den seitlichen Rand der Spiegelscheibe 6 und drücken hierbei mit einem nasenartigen Vorsprung 24 auf die Außenfläche der Spiegelscheibe 6, sodass deren Rückseite an einer Anlagefläche 26 zu liegen kommt.

Die Clipse 22 können umfangsseitig entlang des gesamten Rands der Schalenöffnung des Spiegelgehäuses 4 verteilt angeordnet sein. In einer bevorzugten Ausgestaltungsform gemäß den Figuren 1 und 3 ist die Anordnung der Clipse 22 jedoch auf den Bereich der Langseite 14 beschränkt und über die gesamte Erstreckung der gegenüberliegenden Langseite 12 ist eine Nut 28 ausgebildet. Die Nut 28 hat hierbei gemäß Fig. 1 (punktierte Linie) einen Verlauf über die gesamte Erstreckung der Langseite 12 und bis in einen Teilbereich der sich hieran anschließenden beiden kurzen Seiten 16 und 18 hinein. Im Gegensatz zu den Clipsen 22 gemäß Fig. 4 ist die Nut 28 gemäß Fig. 3 nicht elastisch verformbar, obgleich sie ebenfalls einen nasenartigen Vorsprung 30 aufweist, der sich an die Außenseite der Spiegelscheibe 6 anlegt. Durch die elastische Kraft der Clipse 22 auf Seiten der Langseite 14 wird die Scheibe 6 zwischen der Nut 28 und den Clipsen 22 sowohl axial, das heißt in Fig. 2 von oben nach unten als auch radial, das heißt in der Ebene der Spiegelscheibe 6 verspannt.

Bezugszeichen 32 in Fig. 2 bezeichnet einen Verstellmechanismus, mit dem die Ausrichtung des Spiegelgehäuses 4 gegenüber dem Flansch oder Stummel 20 und damit gegenüber der Fahrzeugkarosserie verändert werden kann, um die Blickrichtung der Spiegelscheibe 6 zu verändern.

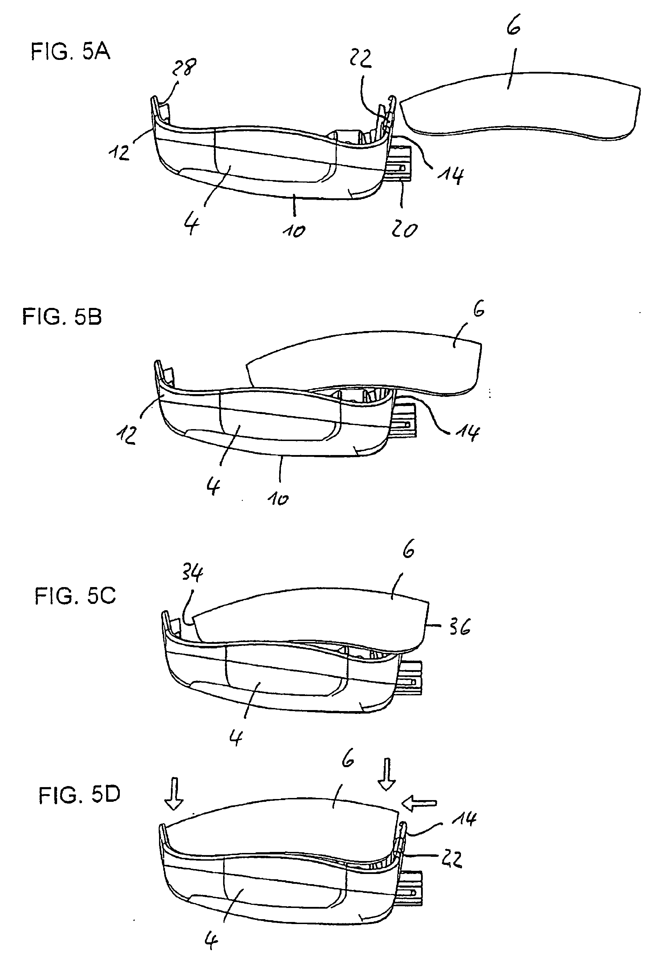

Die Abfolge der Figuren 5A-5D zeigt, wie eine Spiegelscheibe 6 an dem Spiegelträger oder Spiegelgehäuse 4 angeordnet wird. Gemäß den Figuren 5A-5C wird die Spiegelscheibe 6 seitlich von der Langseite 14 her kommend über die Langseite 14 beziehungsweise die dortigen Halteclipse 22 geschoben, bis die Relativlage etwa gemäß Fig. 5C erreicht ist. In dieser Relativlage beginnt eine Vorderkante 34 beziehungsweise beginnen die sich hieran anschließenden seitlichen Randabschnitte der Spiegelscheibe 6 in die Nut 28 auf Seiten der kurzen Seiten 16 und 18 einzufädeln, sodass bei einem Weiterschieben der Spiegelscheibe 6 aus der Stellung gemäß Fig. 5C in diejenige gemäß Fig. 5D der gesamte dem Verlauf der Nut 28 entsprechende Abschnitt der Vorderkante 34 der Spiegelscheibe 6 in besagter Nut 28 aufgenommen wird. Eine in Bewegungsrichtung oder Aufschubrichtung hinten liegende Kante oder Hinterkante 36 der Spiegelscheibe 6 sitzt in der Ausrichtung gemäß Figur 5D auf der Oberseite der Vorsprünge 24 der Clipse 22 auf und durch einen Druck in Fig. 5D nach unten überläuft die Hinterkante 36 die Vorsprünge 24 der Clipse 22, sodass diese elastisch nach außen verformt werden und über der Spiegelscheibe 6 in ihre Ausgangslage rückfedern oder zurückschnappen, wie in Fig. 4 gezeigt.

Die Spiegelscheibe 6 ist in dieser Stellung durch die Nut 28 und durch eine entsprechende Anzahl der Clipse 22 an einer Bewegung in alle drei Richtungen des Koordinatensystems gehindert und vibrationsfrei gehalten.

Bei einem Austausch einer beschädigten Spiegelscheibe 6 genügt es, durch entsprechendes Werkzeug die Vorsprünge 24 der Clipse 22 außer Anlage mit der Spiegelscheibe 6 zu bringen, wonach diese durch eine Umkehrung des Bewegungsablaufs der Figuren 5A-5D von Spiegelgehäuse 4 abgenommen werden und durch eine neue Spiegelscheibe ersetzt werden kann.

Es sind zur Befestigung der Spiegelscheibe 6 am Spiegelgehäuse 4 keinerlei Befestigungsmittel seitens der Spiegelscheibe 6 notwendig, sodass ein Austausch der Spiegelscheibe mit geringen Kosten erfolgen kann, da keine komplette Glaseinheit bestehend aus Scheibe und hiermit verklebtem Träger notwendig ist. Im Gegensatz zu einem eingeschrumpften Glas ist eine Entfernung und ein Austausch der Spiegelscheibe 6 jederzeit zerstörungsfrei möglich und darüber hinaus kann als Material für den Spiegelträger oder das Spiegelgehäuse 6 ein Material gewählt werden, das optimal auf die jeweiligen Anforderungen abgestimmt ist und nicht zwingend die zur Schrumpfbefestigung der Spiegelscheibe notwendigen Eigenschaften haben muss.

Die als Clipse 22 ausgebildeten Haltemittel 8, mit denen das zerstörungsfreie Einsetzen und insbesondere Entfernen der Spiegelscheibe 6 möglich ist, sind bevorzugt aus dem Material des Spiegelträgers einstückig ausgebildet. Es können jedoch auch separate Bauelemente sein, die an dem Spiegelträger durch geeignete Mittel angebracht werden, beispielsweise dann, wenn das Material des Spiegelträgers keine elastischen oder flexiblen Eigenschaften haben sollte.

Zwischen den Langseiten 12 und 14 und/oder den kurzen Seiten 16 und 18 können im Inneren der Schale des Spiegelgehäuses 4 Verstärkungsrippen oder -stege verlaufen, die sich bis zur Ebene der Spiegelscheibe 6 erstrecken können, sodass im Montagezustand etwa gemäß Fig. 2 die Spiegelscheibe 6 durch derartige Rippen oder Stege eine Abstützung von hinten her erfährt.

Die Beschreibung der vorliegenden Erfindung erfolgte anhand eines Ausführungsbeispiels, bei dem der Spiegelträger 4 als Spiegelgehäuse in Schalenform ausgebildet ist.

Der Gegenstand der vorliegenden Erfindung ist gleichermaßen gut bei einem Spiegelelement anwendbar, bei dem der Spiegelträger die Form einer Spiegelträgerplatte hat, welche dann wiederum mit einer hieran angeordneten Spiegelscheibe in einem Aufnahmegehäuse zu liegen kommt, wobei dann zwischen Spiegelträgerplatte und Aufnahmegehäuse ein entsprechender ein- oder mehrachsiger Verstellmechanismus vorhanden ist. Wie bereits Eingangs erwähnt, ist der Begriff "Platte" nicht zwingend als ein ebenes oder flaches Bauteil zu interpretieren, an welchem die Spiegelscheibe vollflächig plan anliegt. Die "Platte" ist eher als eine Art offene flache Schale zu verstehen, wobei die Spiegelscheibe am Rand der Schalenöffnung lagefixierbar ist.

Die Spiegelträgerplatte kann hierbei zumindest abschnittsweise eine Größe derart haben, dass sie umfangsseitig über die Spiegelscheibe vorsteht und in diesen vorstehenden Bereichen oder diesem vorstehenden Rand oder Überstand können dann entsprechende Haltemittel 8 angeordnet und/oder ausgebildet sein, etwa analog zu den Clipsen 22 und der Nut 28 gemäß Fig. 1.

Hierbei werden die gleichen Vorteile wie bei der Ausführungsform gemäß den Figuren 1 bis 5 mit dem schalenförmigen Spiegelgehäuse erzielt, das heißt leichte Austauschbarkeit der Spiegelscheibe im Schadensfall, Flexibilität bei der Wahl des Materials für Spiegelträger/Spiegelgehäuse/Spiegelträgerplatte, flexiblere Montagemöglichkeiten und Kostenersparnis.

## Patentansprüche

1. Spiegelelement, mit einer Spiegelscheibe (6) und einem Spiegelträger (4), wobei die Spiegelscheibe (6) am Spiegelträger (4) umfangsseitig mit Haltemitteln (8) festgelegt ist, wobei die Haltemittel (8) in Form von elastisch verformbaren Halteclipsen (22) auf Seiten des Spiegelträgers (4) angeordnet sind, welche die Spiegelscheibe (6) an deren Umfangskante umgreifen und zerstörungsfrei wieder entfernbar an dem Spiegelträger (4) lagefixieren,
**dadurch gekennzeichnet, dass**
ein Teil der Umfangserstreckung der Spiegelscheibe (6) in eine an dem Spiegelträger (4) ausgebildete Nut (28) einsteckbar ist und der verbleibende Teil der Umfangserstreckung der Spiegelscheibe (6) durch die Halteclipse (22) lagefixiert ist.

2. Spiegelelement nach Anspruch 1, **dadurch gekennzeichnet, dass** die Halteclipse (22) den Umfangsrand der Spiegelscheibe (6) gegen eine an dem Spiegelträger (4) randseitig ausgebildete Anlagefläche (26) drücken.

3. Spiegelelement nach Anspruch 1 oder 2, **dadurch gekennzeichnet, dass** die Halteclipse (22) entlang des verbleibenden Teils der Umfangserstreckung der Spiegelscheibe (6) verteilt, insbesondere gleichmäßig verteilt angeordnet sind.

4. Spiegelelement nach einem der Ansprüche 1 bis 3, **dadurch gekennzeichnet, dass** die Nut und die Halteclipse (22) zumindest an zwei einander gegenüberliegenden Umfangsbereichen des Spiegelträgers(4) ausgebildet und/oder angeordnet sind.

5. Spiegelelement nach einem der Ansprüche 1 bis 4, **dadurch gekennzeichnet, dass** die Halteclipse (22) einstückig mit dem Spiegelträger (4) ausgebildet sind.

6. Spiegelelement nach einem der Ansprüche 1 bis 5, **dadurch gekennzeichnet, dass** die Haltemittel (8) die Spiegelscheibe (6) zwischen sich verspannen.

7. Spiegelelement nach einem der Ansprüche 1 bis 6, **dadurch gekennzeichnet, dass** der Spiegelträger (4) in Form einer offenen Schale ausgebildet ist, wobei die Spiegelscheibe (6) am Rand der Schalenöffnung lagefixierbar ist.

8. Spiegelelement nach einem der Ansprüche 1 bis 7, **dadurch gekennzeichnet, dass** die Schalenform des Spiegelträgers (4) in Draufsicht im Wesentlichen trapezförmig ist, wobei die Nut (28) durchgängig über eine volle Längserstreckung einer der Trapezseiten (12) und über einen Teil der Längserstreckungen der beiden sich hieran anschließenden Trapezseitenseiten (16, 18) verläuft.

9. Spiegelelement nach Anspruch 7 oder 8, **dadurch gekennzeichnet, dass** wenigstens eine Verstärkungsrippe die Schalenöffnung derart überspannt, dass die Spiegelscheibe (6) in ihrer fixierten Endlage hieran aufliegt.

10. Spiegelelement nach einem der Ansprüche 1 bis 9, **dadurch gekennzeichnet, dass** der Spiegelträger ein Spiegelgehäuse (4) ist.

11. Spiegelelement nach einem der Ansprüche 1 bis 9, **dadurch gekennzeichnet, dass** der Spiegelträger eine flache Schale als Spiegelscheibenträger ist.

12. Spiegelelement nach Anspruch 11, **dadurch gekennzeichnet, dass** der Spiegelscheibenträger im Wesentlichen mit seinem gesamten Umfangsrand einen Teil des Spiegelgehäuses bildet.

13. Fahrzeugrückspiegel, **gekennzeichnet durch** ein im Spiegelgehäuse angeordnetes Spiegelelement nach Anspruch 11 oder 12, welches gegenüber dem Spiegelgehäuse um wenigstens eine Achse verstellbar ist.

## Claims

1. A mirror element comprising a mirror pane (6) and a mirror support (4), wherein the mirror pane (6) is fixed peripherally on the mirror support (4) with the aid of retaining means (8), the retaining means (8) having the form of elastically deformable retaining clips (22) being disposed on sides of the mirror support (4), and said retaining clips gripping the mirror pane (6) at the peripheral rim thereof and fixing it in position on the mirror support (4) so that it is removable again in a non-destructive manner,
**characterized in that**
a part of the peripheral extension of the mirror pane (6) is adapted to be inserted into a groove (28) formed on the mirror support (4), and the remaining part of the peripheral extension of the mirror pane (6) is fixed in position by the retaining clips (22).

2. The mirror element according to claim 1, **characterized in that** the retaining clips (22) urge the peripheral rim of the mirror pane (6) against a contact surface (26) formed on the rim of the mirror support (4).

3. The mirror element according to claim 1 or 2, **characterized in that** the retaining clips (22) have a distributed arrangement, in particular a uniformly distributed arrangement, along the remaining part of the peripheral extension of the mirror pane (6).

4. The mirror element according to any one of claims 1 to 3, **characterized in that** the groove and the retaining clips (22) are formed and/or disposed at at least two mutually opposed peripheral regions of the mirror support (4).

5. The mirror element according to any one of claims 1 to 4, **characterized in that** the retaining clips (22) are formed integrally with the mirror support (4).

6. The mirror element according to any one of claims 1 to 5, **characterized in that** the retaining means (8) brace the mirror pane (6) between each other.

7. The mirror element according to any one of claims 1 to 6, **characterized in that** the mirror support (4) is realized in the form of an open shell, wherein the mirror pane (6) is adapted to be fixed in position on the rim of the shell opening.

8. The mirror element according to any one of claims 1 to 7, **characterized in that** the shell shape of the mirror support (4) is substantially trapezoidal in a top view, wherein the groove (28) runs continuously over a full longitudinal extension of one of the trapeze sides (12) and over a part of the longitudinal extensions of the two trapeze sides (16, 18) connecting thereto.

9. The mirror element according to claim 7 or 8, **characterized in that** at least one reinforcing rib spans the shell opening in such a way that the mirror pane (6) rests thereon in its fixed final position.

10. The mirror element according to any one of claims 1 to 9, **characterized in that** the mirror support is a mirror casing (4).

11. The mirror element according to any one of claims 1 to 9, **characterized in that** the mirror support is a flat shell as a mirror pane support.

12. The mirror element according to claim 11, **characterized in that** substantially the entire peripheral rim of the mirror pane support constitutes a part of the mirror casing.

13. A rear view mirror for a vehicle, **characterized by** a mirror element according to claim 11 or 12 which is disposed in the mirror casing and adjustable relative to the mirror casing about at least one axis.

## Revendications

1. Elément de miroir, comportant une vitre réfléchissante (6) et un support de miroir (4), la vitre réfléchissante (6) étant fixée contre le support de miroir (4) par des moyens de maintien (8) à la périphérie de celui-ci, les moyens de maintien (8) étant disposés sous la forme de clips de maintien (22) élastiquement déformables sur des côtés du support de miroir (4) qui enserrent la vitre réfléchissante (6) sur son bord périphérique et fixent celle-ci en position contre le support de miroir (4) tout en pouvant être enlevés sans être abîmés,
**caractérisé**
**en ce qu'**une partie de l'extension périphérique de la vitre réfléchissante (6) peut être insérée dans une rainure (28) formée sur le support de miroir (4), et que la partie restante de l'extension périphérique de la vitre réfléchissante (6) est fixée en position par les clips de maintien (22).

2. Elément de miroir selon la revendication 1, **caractérisé en ce que** les clips de maintien (22) serrent le bord périphérique de la vitre réfléchissante (6) contre une surface d'appui (26) formée sur le bord du support de miroir (4).

3. Elément de miroir selon la revendication 1 ou la revendication 2, **caractérisé en ce que** les clips de maintien (22) sont répartis sur tout le contour de la vitre réfléchissante (6), en particulier de manière régulière.

4. Elément de miroir selon l'une des revendications 1 à 3, **caractérisé en ce que** la rainure et les clips de maintien (22) sont formés et/ou disposés au moins dans deux zones périphériques opposées du support de miroir (4).

5. Elément de miroir selon l'une des revendications 1 à 4, **caractérisé en ce que** les clips de maintien (22) sont formés d'une seule pièce avec le support de miroir (4).

6. Elément de miroir selon l'une des revendications 1 à 5, **caractérisé en ce que** les moyens de maintien (8) calent la vitre réfléchissante (6) entre eux.

7. Elément de miroir selon l'une des revendications 1 à 6, **caractérisé en ce que** le support de miroir (4) est réalisé sous la forme d'une coque ouverte, la vitre réfléchissante (6) étant fixable en position contre le bord de l'ouverture de coque.

8. Elément de miroir selon l'une des revendications 1 à 7, **caractérisé en ce que** la forme en coque du support de miroir (4) est sensiblement trapézoïdale vue du dessus, la rainure (28) s'étendant continûment sur toute l'extension longitudinale d'un des côtés (12) du trapèze et sur une partie des extensions longitudinales des deux côtés (16, 18) du trapèze attenants au précédent.

9. Elément de miroir selon la revendication 7 ou la revendication 8, **caractérisé en ce qu'**au moins une nervure de renforcement traverse l'ouverture de coque de telle manière que la vitre réfléchissante (6) repose contre elle dans sa position de fixation finale.

10. Elément de miroir selon l'une des revendications 1 à 9, **caractérisé en ce que** le support de miroir est un boîtier de miroir (4).

11. Elément de miroir selon l'une des revendications 1 à 9, **caractérisé en ce que** le support de miroir est une coque aplatie en tant que support de vitre réfléchissante.

12. Elément de miroir selon la revendication 11, **caractérisé en ce que** le support de vitre réfléchissante forme une partie du boîtier de miroir, essentiellement par tout son bord périphérique.

13. Rétroviseur de véhicule, **caractérisé par** un élément de miroir selon la revendication 11 ou la revendication 12, disposé dans le boîtier de miroir et réglable autour d'au moins un axe par rapport au boîtier de miroir.
